**Europäisches Patentamt**

**European Patent Office**

**Office européen des brevets**

(19)

(11) Veröffentlichungsnummer : **0 541 491 A1**

## (12) EUROPÄISCHE PATENTANMELDUNG

(21) Anmeldenummer : **92810851.3**

(22) Anmeldetag : **04.11.92**

(51) Int. Cl.$^5$ : **B60Q 1/14**

(30) Priorität : **06.11.91 CH 3230/91**

(43) Veröffentlichungstag der Anmeldung :
**12.05.93 Patentblatt 93/19**

(84) Benannte Vertragsstaaten :
**AT CH DE FR GB IT LI NL SE**

(71) Anmelder : **JESA AUTOMOBILE, JUTZELER, ERLENBACH**
**Simmentalstrasse**
**CH-3762 Erlenbach i/Simmental (CH)**

(72) Erfinder : **Jutzeler, Andreas**
**CH-3762 Erlenbach i.S. (CH)**

(74) Vertreter : **Fischer, Franz Josef et al**
**BOVARD AG Patentanwälte VSP**
**Optingenstrasse 16**
**CH-3000 Bern 25 (CH)**

(54) **Vorrichtung zum automatischen Umschalten von Fahrzeugscheinwerfern zwischen Fernlicht und Abblendlicht.**

(57) Die Vorrichtung umfasst einen auf Gegenlicht ansprechenden Fühler (1), eine Steuereinrichtung (2) mit einer Logikschaltung, zwei Adapter (12 ; 12'), die als Zwischenstecker ausgebildet sind und zwischen die Fahrzeugscheinwerfer (8, 8') und Stromzuführungsleitungen (5, 6, 7 ; 5', 6', 7') zu den beiden Fahrzeugscheinwerfern einfügbar sind. In jedem der Adapter sind mindestens zwei Schaltelemente (3, 4 ; 3', 4) und eine Sperrdiode (11, 11') derart angeordnet, dass im Störungsfalle der Vorrichtung in jedem Fall mit dem manuellen Fernlicht-Abblend-Schalter des Fahrzeuges das Fernlicht abgeschaltet und das Abblendlicht eingeschaltet werden kann. Die erfindungsgemässe Vorrichtung zeichnet sich im weiteren dadurch aus, dass sie in einem Fahrzeug, ohne Eingriffe in die fahrzeuginterne Verdrahtung vornehmen zu müssen, nachrüstbar ist.

FIG. 1

Jouve, 18, rue Saint-Denis, 75001 PARIS

Die vorliegende Erfindung bezieht sich auf eine Vorrichtung zum automatischen Umschalten von Fahrzeugscheinwerfern zwischen Fernlicht und Abblendlicht gemäss dem Oberbegriff des Patentanspruches 1.

Solche Vorrichtungen, die bereits verschiedentlich vorgeschlagen worden sind, dienen dazu, den Führer eines Fahrzeuges, der bei Nachtfahrten unter erschwerten Bedingungen unterwegs ist, von der manuellen Betätigung des Fernlicht-Abblend-Schalters zu entheben. Dadurch wird vermieden, dass sich entgegenkommende Fahrzeuge durch Blenden, weil einer oder beide der Fahrzeugführer vergessen haben, vom Fernlicht auf das Abblendlicht zurückzuschalten, zusätzlich behindern. Ebenfalls sorgt die Automatik dafür, dass wieder auf Fernlicht geschaltet wird, wenn kein entgegenkommendes Fahrzeug mehr festgestellt wird. Mit einer solchen Vorrichtung kann, wenn sie richtig eingestellt ist, die Verkehrssicherheit bei Nacht wesentlich erhöht werden.

Bekannte Vorrichtungen, eine davon ist beispielsweise in der deutschen Offenlegungsschrift DE 31 13 363 offenbart, weisen den Nachteil auf, dass die Stromzuführungsleitungen zu den Fahrzeugscheinwerfern über zusätzliche Kontakte geführt werden müssen. Dies betrifft sowohl die Stromzuführungsleitung für das Abblendlicht als auch die Stromzuführungsleitung für das Fernlicht. Diese zusätzlichen Kontakte werden üblicherweise von einem oder mehreren Relais betätigt, welche von einem elektronischen Schaltkreis, der auf ein Fühlersignal reagiert, angesteuert werden. Im Falle eines Defektes dieser bekannten Vorrichtungen können das oder die Relais entweder dauernd erregt oder abgefallen sein. Es kann aus diesem Grunde nicht gewährleistet werden, dass in jedem Störungsfall das Fernlicht ausgeschaltet und das Abblendlicht eingeschaltet werden kann. Oftmals ist deshalb ein zusätzlicher Schalter zum Ausschalten der Vorrichtung vorgesehen.

Zum Nachrüsten dieser bekannten Vorrichtungen in bestehende Fahrzeuge ist es erforderlich, Eingriffe in die Fahrzeugverdrahtung zu machen.

Insbesondere wegen der unzureichenden Funktionssicherheit und wegen den relativ aufwendigen und teuren Nachrüstkosten haben sich derartige Vorrichtungen bis heute nicht durchsetzen können.

Es ist die Aufgabe der vorliegenden Erfindung, die Sicherheitsaspekte einer solchen Vorrichtung gegenüber dem Stand der Technik zu verbessern. Als weitere Aufgabe soll die erfindungsgemässe Vorrichtung in bestehende Fahrzeuge nachrüstbar sein, ohne dass deren Fahrzeugverdrahtung abgeändert werden muss.

Als Lösung der Aufgabe wird eine Vorrichtung mit den im kennzeichnenden Teil des Patentanspruches 1 aufgeführten Merkmalen vorgeschlagen.

Dadurch, dass mindestens die Stromzuführungsleitung zum Abblendlicht dauernd galvanisch durchgeschaltet ist, wird erreicht, dass das Abblendlicht mit dem Fernlicht-Abblend-Schalter manuell jederzeit eingeschaltet werden kann. Das Vorhandensein der Sperrdiode verhindert bei manuell eingeschaltetem Abblendlicht, unabhängig vom Zustand der Schaltelemente zum automatischen Umschalten zwischen dem Fernlicht und dem Abblendlicht, ein zusätzliches Brennen des Fernlichtes. Die Steuereinrichtung ist so ausgelegt, dass jederzeit, auch bei entgegenkommendem Verkehr, die Lichthupe manuell eingeschaltet werden kann. Bei diesem Vorgang wird üblicherweise eine Spannung sowohl an das Abblendlicht als auch an das Fernlicht angelegt.

In einer bevorzugten Ausführungsform sind mindestens die Schaltelemente und die Sperrdiode, die zum Umschalten zwischen dem Fernlicht und dem Abblendlicht eines Fahrzeugscheinwerfers bestimmt sind, in einem als Zwischenstecker ausgebildeten Adapter untergebracht. Je ein solcher Adapter kann zwischen den Stecker eines Fahrzeugscheinwerfers und die zugeordneten Stromzuführungsleitungen gesteckt werden, indem zuerst die Stromzuführungsleitungen vom Scheinwerferstecker abgesteckt, der Adapter auf den letzteren aufgesteckt und die Stromzuführungsleitungen auf der anderen Seite des Adapters wieder angesteckt werden. Jeder der Adapter ist über elektrische Verbindungsleitungen, wovon je eine zu einem Steuereingang von jedem der Schaltelemente führt, mit einer elektronischen Steuereinrichtung verbunden. Es ist ohne weiteres denkbar, dass die letztere in einem der Adapter untergebracht sein kann. Dadurch, dass Abzweigungen von den Stromzuführungsleitungen vorgesehen und als Speiseleitungen mit der Steuereinrichtung verbunden sind, ist die Speisespannungsversorgung der letzteren bei eingeschaltetem Abblend- oder Fernlicht automatisch gewährleistet. Bei abgeschaltetem Abblend- und Fernlicht wird durch die Steuereinrichtung kein Strom verbraucht. Ein Spannungsstabilisator in der Steuereinrichtung hat die Aufgabe, die letztere sowohl für Fahrzeugspannungen von 6, 12 oder 24 Volt tauglich zu machen. Die vom Spannungsstabilisator gespiesene Elektronik der Steuereinrichtung funktioniert üblicherweise mit 5 Volt.

Die vorteilhafterweise als Schaltelemente eingesetzten Leistungs-MOSFET's lassen sich praktisch leistungslos steuern.

Anhand von Figuren ist die vorliegende Erfindung im folgenden beispielsweise näher beschrieben. Es zeigen

**Fig. 1** ein Blockschaltbild einer erfindungsgemässen Vorrichtung und

**Fig. 2** eine schematische Darstellung einer Ausführungsform der in der Fig. 1 gezeigten Vorrichtung.

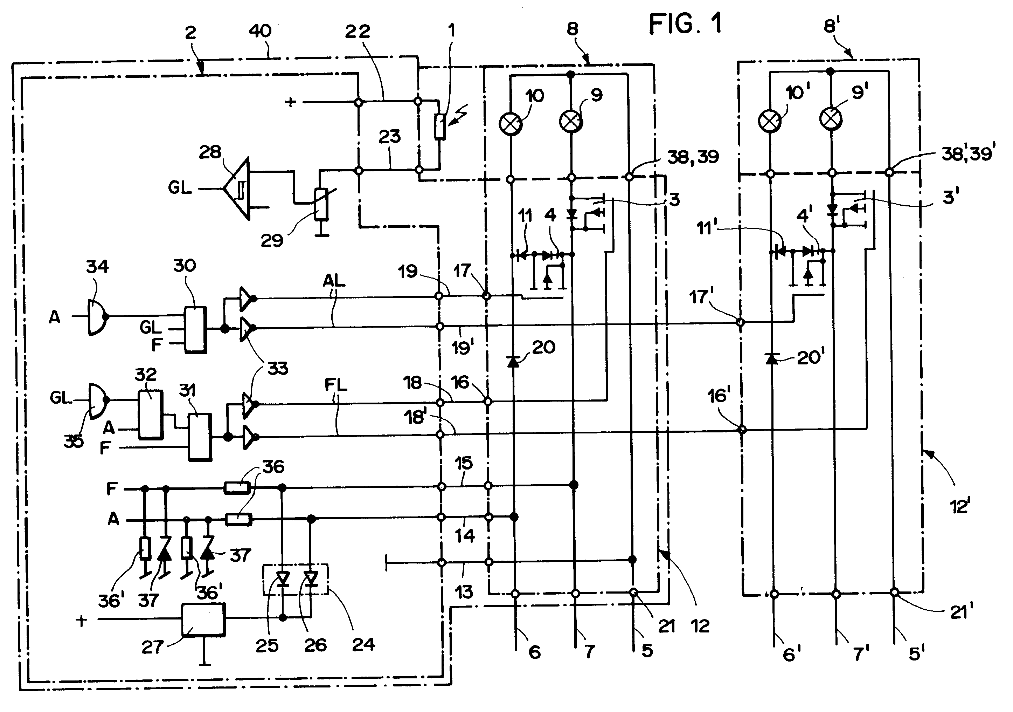

Die erfindungsgemässe Vorrichtung, die in der Fig. 1 als Blockschaltbild dargestellt ist, umfasst einen mit 1 bezeichneten, auf Licht ansprechenden Fühler. Dieser kann, als Gegenlichtsensor, bei einer nachgerüsteten Vorrichtung beispielsweise im Kühlergrill eines Fahrzeuges angeordnet werden. Bei Neuausrüstungen, während dem Herstellen eines Fahrzeuges, wird der Fühler 1 vorzugsweise im Scheinwerferglas oder im Reflektor des einen Scheinwerfers integriert. Als Fühler 1 wird ein fotoelektrisches Bauelement, beispielsweise ein Fotowiderstand, verwendet, das zum Erzeugen einer bestimmten Richtwirkung mit einer Optik ausgerüstet ist und dessen Charakteristik so ausgelegt ist, dass es auf Rotlicht empfindlicher reagiert als auf weisses Licht. Durch die Richtwirkung wird erreicht, dass kurz vor dem Kreuzen eines Fahrzeuges die Vorrichtung wieder auf Fernlicht umschaltet, sofern kein weiteres Fahrzeug entgegenkommt oder kein anderes im wesentlichen von vorn einfallendes Licht vorhanden ist. Weil der Fühler 1 ein Empfindlichkeitsmaximum etwa bei Rotlicht aufweist, wird durch das Detektieren des Lichts von den Schlussleuchten eines vorausfahrenden Fahrzeuges auf Abblendlicht umgeschaltet. Der Fühler 1 ist über zwei elektrische Fühlerverbindungsleitungen 22, 23 mit einer Steuereinrichtung 2 verbunden. In jedem von zwei Fahrzeugscheinwerfern 8, 8' ist eine Lampe vorhanden, in welcher, wie es heute üblich ist, sowohl ein Fernlichtteil 9, 9' als auch ein Abblendlichtteil 10, 10' integriert ist. Jeder der Fahrzeugscheinwerfer weist drei Stromanschlüsse auf. Mit je einem ersten Stromanschluss ist je der eine Pol des Fernlichtes 9, 9' und des Abblendlichtes 10, 10' verbunden. Ein zweiter Stromanschluss führt zum anderen Pol des Abblendlichtes 10, 10' und ein dritter Stromanschluss führt zum anderen Pol des Fernlichtes 9, 9'.

Zu den genannten drei Stromanschlüssen von jedem der Fahrzeugscheinwerfer 8, 8' sind Stromzuführungsleitungen geführt. Je eine erste Stromzuführungsleitung 5, 5' stellt eine Masseverbindung mit dem ersten Anschluss her. Je eine zweite Stromzuführungsleitung 6, 6' ist zum Einschalten des Abblendlichtes 10, 10' bestimmt und je eine dritte Stromzuführungsleitung 7, 7' ist zum Einschalten des Fernlichtes 9, 9'. Während je die erste der Stromzuführungsleitungen 5, 5' mit der Fahrzeugmasse und mit dem Minuspol der Fahrzeugbatterie direkt verbunden ist, führen die zweiten und die dritten der Stromzuführungsleitungen 6, 6', 7, 7' zum Einschalten des Abblendlichtes 10, 10' und/oder des Fernlichtes 9, 9' je ein vom Pluspol der Fahrzeugbatterie stammendes geschaltetes positives Potential. Dieses ist über den in jedem Fahrzeug vorhandenen Lichtschalter sowie über den ebenfalls in jedem Fahrzeug vorhandenen Fernlicht-Abblend-Schalter geführt. Diese Schalter sind in der Fig. 1 nicht gezeichnet. Damit mit der erfindungsgemässen Vorrichtung ein automatisches Umschalten zwischen Fernlicht und Abblendlicht möglich ist, ist es erforderlich, dass auf die genannten Stromzuführungsleitungen einwirkende, ansteuerbare Schaltelemente 3, 4, 3', 4' vorhanden sind. Diese Schaltelemente könnten beispielsweise Relaiskontakte sein. In der gezeigten Vorrichtung sind dazu jedoch elektronische Bauelemente eingesetzt worden. Vorzugsweise ist pro Schaltelement 3, 4, 3', 4' je ein selbstsperrender P-Kanal-Leistungs-MOSFET vorgesehen. Ein erstes der Schaltelemente 3, 3' ist in Reihe mit der dritten Stromzuführungsleitung 7, 7' geschaltet. Die Quelle jedes dieser MOSFET's 3, 3' ist mit der dritten Stromzuführungsleitung 7, 7' verbunden. Die Senke ist auf den dritten Stromanschluss für das Fernlicht 9, 9' geschaltet. Ein zweites der Schaltelemente 4, 4', ebenfalls je ein selbstsperrender P-Kanal-Leistungs-MOSFET, ist zum Verbinden der dritten Stromzuführungsleitung 7, 7' mit der zweiten Stromzuführungsleitung 6, 6' bestimmt. Die Quelle je des zweiten Leistungs-MOSFET's 4, 4' ist mit der Quelle je des ersten Leistungs-MOSFET's 3, 3' verbunden. Je die Senke der zweiten MOSFET's 4, 4' ist über je eine Sperrdiode 11, 11' auf die zweite Stromzuführungsleitung 6, 6' geführt. Die Steuereingänge je des ersten MOSFET's 3, 3' und je des zweiten MOSFET's 4, 4' von jedem der Fahrzeugscheinwerfer 8, 8' sind über erste und zweite Verbindungsleitungen 18, 18', 19, 19' mit der Steuereinrichtung 2 verbunden. Die MOSFET's 3, 4, 3', 4' und die Sperrdioden 11, 11' sind derart angeordnet, dass unabhängig vom Schaltzustand von jedem der MOSFET's in jedem Fall mit dem Fernlicht-Abblend-Schalter das Abblendlicht 10, 10' eingeschaltet und das Fernlicht 9, 9' ausgeschaltet werden kann. Dieser wesentliche Vorteil in Bezug auf die Sicherheitsaspekte solcher Vorrichtungen wird dadurch erreicht, dass die zweite Stromzuführungsleitung 6, 6' für das Abblendlicht 10, 10' durch das Einfügen der Vorrichtung nicht aufgetrennt wird, sondern vom Fernlicht-Abblend-Schalter bis zum Abblendlicht 10, 10' dauernd galvanisch durchgeschaltet ist.

Die Speisespannungsversorgung der Steuereinrichtung 2 erfolgt über eine erste 13, zweite 14 und dritte Speiseleitung 15. Mit der ersten Speiseleitung 13, die von der ersten Stromzuführungsleitung 5 zum einen der Scheinwerfer 8 abgegriffen ist, wird das Minus- oder Massepotential der Fahrzeugbatterie der Steuereinrichtung 2 zugeführt. Die positive Speisespannung erhält die letztere über die zweite und/oder dritte Speiseleitung 14, 15, welche die zweite und die dritte Stromzuführungsleitungen 6, 7 zum genannten einen Scheinwerfer 8 abgreifen.

Die positiven Speisespannungen sind über je eine Diode 25, 26 an einen Eingang eines Spannungsstabilisators 27 geschaltet. Die Dioden stellen für die Speisespannungen ein erstes ODER-Tor 24 dar. Sie dienen zusammen mit den weiteren Dioden 20, 20', welche je in die zweite Stromzuführungsleitung 6, 6' geschaltet sind, auch als Entkopplungsdioden zum Verhindern eines Durchgreifens der positiven Spannung von der zweiten Stromzuführungsleitung auf die dritte Stromzuführungsleitung und umgekehrt. Dies ist erforderlich, weil in der Steuereinrichtung 2 von der zweiten und dritten Speiseleitung 14, 15 die logischen Signale A, F zum Feststellen, ob das Abblendlicht und/oder das Fernlicht manuell eingeschaltet sind, abgeleitet werden. Dazu ist je ein Spannungsstabilisierglied, bestehend aus einem Widerstandspaar 36, 36' und einer Zenerdiode 37 in bekannter Art an die zweite und an die dritte Speiseleitung geschaltet.

Der Spannungsstabilisator 27 liefert an seinem Ausgang eine einer heutigen Norm entsprechende Ausgangsspannung von 5 Volt, unabhängig ob die Fahrzeugbatterie 6 Volt, 12 Volt oder 24 Volt aufweist. Durch die genannten Spannungsstabilisierglieder 36, 36', 37 werden ebenfalls die logischen Signale A, F unabhängig von der Batteriespannung des Fahrzeuges auf etwa die genannte Spannung stabilisiert.

Die erste Fühlerverbindungsleitung 22 führt dem Fühler 1 die stabilisierte positive Spannung zu. Mit der zweiten Fühlerverbindungsleitung 23 ist der Fühler 1 mit einem einstellbaren Widerstand 29 verbunden. Dieser einstellbare Widerstand oder Potentiometer dient zum Einstellen der Empfindlichkeit der Vorrichtung. Die an seinem Mittelabgriff abgenommene Spannung wird einem Schwellwertschalter oder Schmitt-Trigger mit einer gewünschten Ein-Ausschalthysterese zugeführt. Am Ausgang des Schmitt-Triggers ist ein logisches Signal GL vorhanden.

Die logischen Signale A, F und GL weisen, zum Minuspol der Batterie gemessen, entweder eine Spannung von etwa + 5 Volt auf (logisch 1) oder eine Spannung von nahezu 0 Volt (logisch 0).

Die drei logischen Signale werden einer digitalen Logikschaltung zugeführt, welche im wesentlichen ein erstes UND-Tor 30 mit drei Eingängen, ein zweites UND-Tor 31 mit zwei Eingängen, ein zweites ODER-Tor 32 mit zwei Eingängen, zwei als Spannungsinverter geschaltete NAND-Tore 34, 35 sowie vier invertierende Treiberverstärker 33 umfasst. Jeder der Treiberverstärker ist mit je einer der ersten oder der zweiten elektrischen Verbindungsleitung 18, 18', 19, 19' verbunden, welche ihrerseits, wie bereits erwähnt, an die Steuereingänge je der MOSFET's 3, 4, 3', 4' zum Steuern der beiden Scheinwerfer 8, 8' geschaltet sind.

Die Logikschaltung wirkt derart, dass bei manuell eingeschaltetem Abblendlicht, unabhängig ob der Fühler 1 Fremdlicht detektiert oder nicht, das Abblendlicht brennt. Bei manuell eingeschaltetem Fernlicht brennen die Fernlichtlampen so lange, als der Fühler 1 kein Fremdlicht feststellt. Ueber die ersten elektrischen Verbindungleitungen 18, 18' liegt an den Steuereingängen der ersten Schaltelemente 3, 3' eine Spannung von logisch 0. Dies bewirkt, dass diese Schaltelemente (MOSFET's) im leitenden Zustand sind. Infolge der an die dritten Stromzuführungsleitungen angelegten positiven Spannung kann ein Strom durch die ersten Schaltelemente 3, 3' fliessen, was ein Brennen der Fernlichter 9, 9' zur Folge hat. An den zweiten elektrischen Verbindungsleitungen 19, 19' liegt in diesem Falle die Spannung logisch 1 an. Dies hat zur Folge, dass die zweiten Schaltelemente 4, 4' gesperrt sind. Sobald der Fühler 1 Gegenlicht detektiert, erscheint am Ausgang des Schmitt-Triggers 28 eine Spannung GL von logisch 1. Dies hat zur Folge, dass, solange genügend Gegenlicht vorhanden ist, an den ersten elektrischen Verbindungsleitungen 18, 18' die Spannung von logisch 0 auf logisch 1 wechselt, wodurch die ersten Schaltelemente 3, 3' gesperrt werden. Gleichzeitig wechselt die logische Spannung an den zweiten elektrischen Verbindungsleitungen 19, 19' von logisch 1 auf logisch 0. Die zweiten Schaltelemente 4, 4' werden leitend. Der vorher durch die Fernlichter 9, 9' fliessende Strom wird zu den Abblendlichtern 10, 10' umgeleitet. Beim Betätigen der Lichthupe in diesem Zustand (Abblendlicht und Fernlicht werden manuell kurzzeitig gemeinsam eingeschaltet) ist in der Logikschaltung vorgesehen, dass während der Dauer der Lichthupenbetätigung die Potentiale auf den ersten elektrischen Verbindungsleitungen 18, 18' von logisch 1 auf logisch 0 wechseln, was zur Folge hat, dass während dieser Zeitspanne ebenfalls die ersten Schaltelemente 3, 3' leitend werden. Zusätzlich zu den Abblendlichtern 10, 10' brennen auch die Fernlichter 9, 9'.

Die logischen Formeln nach welchen die Logikschaltung ausgelegt ist, lauten

$$AL = A + (F \cdot GL \cdot \overline{A})$$

für die Abblendichter 10, 10' (AL) und

$$FL = F \cdot (\overline{GL} + A)$$

für die Fernlichter 9, 9' (FL)

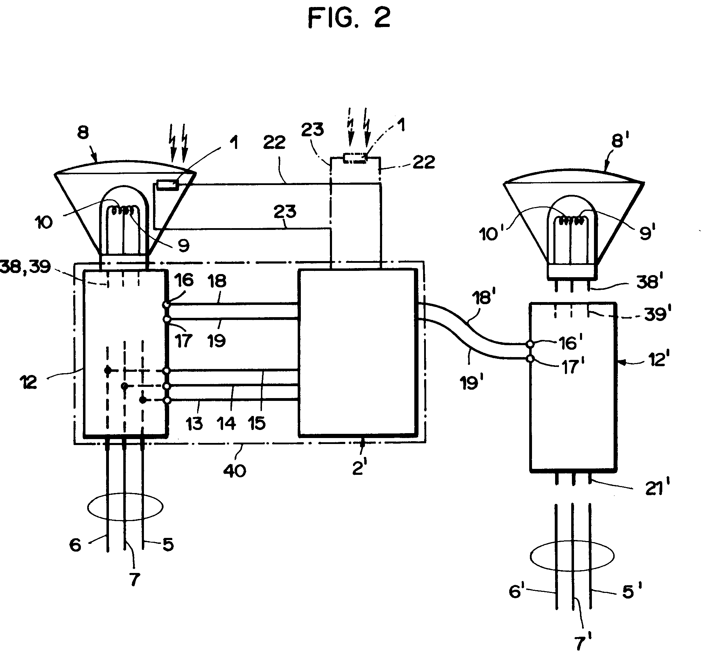

Wie in der Fig. 1 bereits durch die strichpunktierten Linien angedeutet ist und wie es insbesondere aus der Fig. 2 ersichtlich ist, ist die erfindungsgemässe Vorrichtung derart aufgebaut, dass beim Nachrüsten in ein bestehendes Fahrzeug in dessen vorhandene Verdrahtung keine Eingriffe und/oder Ergänzungen gemacht werden müssen. Für jeden der Fahrzeugscheinwerfer 8, 8' ist ein Adapter 12, 12' vorgesehen, der als Zwischenstecker zum Einfügen zwischen den Stecker des Fahrzeugscheinwerfers, dessen Steckerlaschen in der Fig. 2 mit 38, 38' bezeichnet sind und die genanntebn Stromzuführungsleitungen 5, 6, 7, 5', 6', 7' vorgesehen ist. Jeder der Adapter 12, 12' weist auf der dem Fahrzeugscheinwerfer 8, 8' zugewandten Seite Steckerbuchsen 39, 39' auf, die zum Verbinden mit den Steckerlaschen 38, 38' der Fahrzeugscheinwerfer bestimmt sind. Auf der den Fahrzeugscheinwerfern abgewandten Seite sind elektrische Anschlusslaschen 21, 21' vorhanden, auf die die vorher direkt an den Steckerlaschen 38, 38' aufgesteckten Stromzuführungsleitungen 5, 6, 7, 5', 6', 7' nach dem Aufstecken der Adapter 12, 12' auf die Fahrzeugscheinwerfer 8, 8' aufsteckbar sind. In der Fig. 2 ist der linke Adapter 12 im aufgesteckten Zustand und der rechte Adapter 12′ im nicht aufgesteckten Zustand gezeichnet.

In jedem der Adapter 12, 12′ sind mindestens die zum Umschalten des Fernlichtes auf Abblendlicht notwendigen Schaltelemente 3, 4, 3′, 4′ sowie die Sperrdiode 11, 11′ untergebracht. Mindestens zwei elektrische Anschlüsse 16, 17, 16′, 17′, je Adapter die adapterintern mit den Steuereingängen der beiden vorhandenen Schaltelemente verbunden sind, sind zum Anschliessen der genannten ersten und zweiten elektrischen Verbindungsleitungen 18, 19, 18′, 19′ vorgesehen.

Bei einem der Adapter sind Abzweigungen zum Abzweigen der genannten ersten, zweiten und dritten Speiseleitung 13, 14, 15 von den drei Stromzuführungsleitungen 5, 6, 7 vorgesehen.

Wie in den Figuren durch die mit 40 bezeichnete strichpunktierte Linie dargestellt, ist es ohne weiteres denkbar, die Steuereinrichtung 2 mit einem der Adapter, beispielsweise dem Adapter 12, zusammenzufassen. Vom Adapter 12 würden dann lediglich die zwei elektrischen Verbindungleitungen 18′, 19′ zum anderen Adapter 12′ führen sowie die erste und zweite Fühlerverbindungsleitung 22, 23 zum Fühler 1, der entweder in einem der Scheinwerfer 8, 8′ integriert oder, wie dies in der Fig. 2 ebenfalls strichpunktiert dargestellt ist, vorzugsweise im Kühlergrill angeordnet sein kann.

Die erfindungsgemässe Vorrichtung ist also lediglich durch das Abstecken der Stromzuführungsleitungen von den Scheinwerfern und das Einfügen der Adapter zu installieren. Dies kann von jedermann im Do-it-yourself-Verfahren gemacht werden. Einzig das Anordnen des Fühlerelementes 1 bedarf einer gewissen Präszision und Sorgfalt.

Die konstruktive Lösung mit Zwischensteckern ist dabei nicht auf das hier gezeigte Schaltungsbeispiel beschränkt.

**Patentansprüche**

1. Vorrichtung zum automatischen Umschalten von Fahrzeugscheinwerfern (8, 8′) zwischen Fernlicht (9, 9′) und Abblendlicht (10, 10′), mit einem etwa in die Fahrtrichtung des Fahrzeuges gerichteten und auf entgegen dieser Richtung einfallendes Licht ansprechenden Fühler (1), einer Steuereinrichtung (2), die auf vom Fühler erhaltene Signale anspricht sowie mit von der Steuereinrichtung ansteuerbaren Schaltelementen (3, 4; 3′, 4′), welche zum Umschalten zwischen dem Fernlicht und dem Abblendlicht auf Stromzuführungsleitungen (5, 6, 7; 5′, 6′, 7′), mit denen die Fahrzeugscheinwerfer (8, 8′) verbunden sind, einwirken, wobei zu jedem der Fahrzeugscheinwerfer (8, 8′) über eine erste der Stromzuführungsleitung (5, 5′) eine Masseverbindung besteht, über eine zweite der Stromzuführungsleitung (6, 6′) das Abblendlicht und über eine dritte der Stromzuführungsleitung (7, 7′) das Fernlicht einschaltbar sind, dadurch gekennzeichnet, dass die Schaltelemente (3, 4; 3′, 4′) derart angeordnet sind, dass eine dauernde galvanische Verbindung der zweiten der Stromzuführungsleitungen (6, 6′) zum zugeordneten Fahrzeugscheinwerfer (8, 8′) vorhanden ist, und dass je ein den elektrischen Strom nur in der einen Richtung durchlassendes Element (11, 11′) derart eingefügt ist, dass egal von der Schaltstellung der Schaltelemente (3, 4; 3′, 4′) bei manuell eingeschaltetem Abblendlicht (10, 10′) das Fernlicht (9, 9′) ausgeschaltet ist.

2. Vorrichtung nach Anspruch 1, dadurch gekennzeichnet, dass die Schaltelemente Transistoren, vorzugsweise Leistungs-MOSFET's (3, 4; 3′, 4′) sind.

3. Vorrichtung nach Anspruch 1 oder 2, dadurch gekennzeichnet, dass jedem der Fahrzeugscheinwerfer (8, 8′) zwei Schaltelemente (3, 4; 3′, 4′) zugeordnet sind, wobei ein erstes der Schaltelemente (3, 3′) mit der dritten Stromzuführungsleitung (7, 7′) in Reihe geschaltet ist und ein zweites der Schaltelemente (4, 4′), auf der dem Fahrzeugscheinwerfer (8, 8′) abgewandten Seite des ersten Schaltelementes (3, 3′) angeordnet ist, wobei mit dem zweiten Schaltelement (4, 4′) die dritte Stromzuführungsleitung (7, 7′) und die zweite Stromzuführungsleitung (6, 6′) elektrisch verbindbar sind.

4. Vorrichtung nach Anspruch 3, dadurch gekennzeichnet, dass mit den zweiten Schaltelementen (4, 4′) je eines der Elemente (11, 11′), vorzugsweise eine Sperrdiode, in Reihe geschaltet ist.

5. Vorrichtung nach einem der Ansprüche 1 bis 4, dadurch gekennzeichnet, dass für jeden der Fahrzeugscheinwerfer (8, 8′) ein Adapter (12, 12′) in der Form eines Zwischensteckers zum Einfügen zwischen den Stecker des Fahrzeugscheinwerfers (8, 8′) und die zugeordneten Stromzuführungsleitungen (5, 6, 7; 5′, 6′, 7′) vorhanden ist und dass in jedem der Adapter (12, 12′) mindestens die jedem der Fahrzeugscheinwerfer zugeordneten Schaltelemente (3, 4; 3′, 4′) und die Sperrdiode (11, 11′) angeordnet sind.

6. Vorrichtung nach Anspruch 5, dadurch gekennzeichnet, dass die Steuereinrichtung (2) mit einem der Adapter (12) zusammengefasst ist.

7. Vorrichtung nach Anspruch 5 oder 6, dadurch gekennzeichnet, dass von den an einen der Adapter (10) geschalteten ersten, zweiten und dritten Stromzuführungsleitungen (5, 6, 7) je eine Speiseleitung (13, 14, 15) abgezweigt und mit der Steuereinrichtung (2) zum Versorgen der letzteren mit elektrischer Energie verbunden ist.

8. Vorrichtung nach einem der Ansprüche 5 bis 7, dadurch gekennzeichnet, dass jedes der Schaltelemente (3, 4; 3', 4') in jedem der Adapter (12, 12') einen Steuereingang (16, 17; 16', 17') aufweist, der mit der Steuereinrichtung (2) über je eine elektrische Verbindungsleitung (18, 19; 18', 19') verbunden ist.

9. Vorrichtung nach einem der Ansprüche 5 bis 8, dadurch gekennzeichnet, dass die von der einen der zweiten und dritten Stromzuführungsleitungen (6, 7) abgezweigten Speiseleitungen (14, 15) in der Steuereinrichtung (2) einem ODER-Tor (24) zugeführt sind und dass der Ausgang des ODER-Tores (24) mit dem Eingang eines Spannungsstabilisators (27) verbunden ist.

FIG. 1

EP 0 541 491 A1

# FIG. 2

EP 0 541 491 A1

**Europäisches Patentamt**

# EUROPÄISCHER RECHERCHENBERICHT

Nummer der Anmeldung

EP 92 81 0851

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-1 559 930 (CUTROPIA)<br>* das ganze Dokument *<br>--- | 1 | B60Q1/14 |
| A | ELEKTOR September 1990,<br>Seiten 32 - 33<br>J.RUFFEL 'AUTOMATIC HEADLIGHT SWITCH'<br>* Abbildung 1 *<br>--- | 2 | |
| A | FR-A-1 477 484 (MASSIAS)<br>* das ganze Dokument *<br>--- | 1 | |
| A | FR-A-2 185 261 (BANDI & HEINIGER)<br>* Abbildung 1 *<br>----- | 1 | |

**RECHERCHIERTE SACHGEBIETE (Int. Cl.5 )**

B60Q

Der vorliegende Recherchenbericht wurde für alle Patentansprüche erstellt

| Recherchenort | Abschlußdatum der Recherche | Prüfer |
|---|---|---|
| DEN HAAG | 25 JANUAR 1993 | ONILLON C.G.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................
& : Mitglied der gleichen Patentfamilie, übereinstimmendes Dokument